# DEMANDE DE BREVET EUROPEEN

(11) **EP 0 671 702 A1**
(43) Date de publication de la demande: **13.09.1995**
(21) Numéro de dépôt: 95400281.2
(22) Date de dépôt: 10.02.1995
(51) Int. Cl.: G06K 19/07, G06K 7/10

(54) **Système d'identification hyperfréquence courte portée**

(30) Priorité: 15.02.1994 FR 9401691
(71) Demandeur: THOMSON-CSF, 75008 Paris (FR)
(72) Inventeur: Leveque, Michel, F-92402 Courbevoie Cedex (FR); Poumier, Christian, F-92402 Courbevoie Cedex (FR)
(74) Mandataire: Lincot, Georges

(57) **Abrégé**

L'invention concerne un système d'identification hyperfréquence courte portée, par échanges de données suivant un protocole déterminé entre au moins un lecteur et au moins une etiquette active. L'étiquette comporte une chaine de réveil (3) comportant des moyens (6 et 7) permettant d'activer une chaîne d'écriture (4) et une chaîne d'émission (5) de l'étiquette quand une sequence déterminée du protocole d'échange émise par un lecteur en portée radioélectrique est détectée, la chaîne d'émission (5) de l'étiquette comportant des moyens (10) générant un signal d'émission modulé en phase dont la fréquence est stabilisée quelles que soient les désadaptations présentées à l'antenne d'émission/réception (1) de l'étiquette.

Applications : identification de personnes et d'objets: véhicules volés, containers, wagons etc...

## Description

La présente invention concerne un système d'identification hyperfréquence courte portée d'objets ou de personnes. Le domaine est celui des communications à courte portée utilisant les ondes hyperfréquences.

Les systèmes de communications à courte portée en hyperfréquence existant utilisent des badges passifs, réfléchissants ou amplifiants avec réflexion l'onde reçue en la modulant par des données internes au badge. Les étiquettes ou badges sont de deux sortes :
- Badges sans énergie interne, c'est-à-dire pas de pile. Ils sont mis en fonctionnement par détection de l'énergie émise par une balise. La portée est réduite de l'ordre de 1 à 4 mètres.
- Badges avec piles. Dans ce cas la portée est de l'ordre de 10 mètres.

Dans tous les cas, les badges sont de type à réflexion, c'est-à-dire qu'ils réfléchissent une onde hyperfréquence en la modulant par les données contenues dans le badge. Ce qui impose aux balises interrogatrices, d'émettre en permanence. Les balises sont donc consommatrices d'énergie et non portatives. De plus, un tel principe interdit à une balise de gérer un nombre important de badges en portée radioélectrique, d'où des problèmes de collision de messages reçus. La portée limitée des lecteurs oblige à émettre une onde non modulée pendant les phases d'émission des badges. Par conséquent l'autonomie de ces lecteurs est réduite et l'espace hertzien est encombré par l'émission permanente ce qui créé un auto-brouillage en présence de plusieurs lecteurs sur une même zone de communication. Dans un environnement très bruyant du point de vue radioélectrique, les portées sont réduites puisque les signaux reçus par la balise subissent deux fois l'atténuation d'espace libre. Les lecteurs utilisant les badges passifs sont beaucoup plus difficiles à réaliser en terme de performance et utilisent deux antennes. De plus ces badges possèdent des antennes directives et ne peuvent être interrogés dans toutes les directions.

Les différents problèmes à résoudre par l'invention sont :
- de réaliser une étiquette insensible à l'environnement radioélectrique créée par exemple par des allumages de véhicules automobiles, des radiotéléphones,
- de rendre indépendantes les communications descendantes lecteur vers étiquette, et les communications montantes, étiquette vers lecteur,
- d'éviter l'auto brouillage du système du fait du grand nombre d'objets à identifier en portée radioélectrique,
- de maîtriser la portée même en l'absence de perturbation,
- et de concevoir une étiquette de telle manière que les lecteurs soient vraiment portatifs en ayant une grande autonomie.

Un système d'échanges de données par ondes électromagnétiques, faisant l'objet d'une demande de brevet français n° 2 666 941 déposée par la Demanderesse, utilise un lecteur fixe communiquant avec un badge comportant un oscillateur hyperfréquence dans sa partie modulateur-démodulateur.

Cet oscillateur est constitué d'un seul transistor, de préférence un transistor à effet de champ, qui fonctionne, soit en démodulateur soit en oscillateur générant la fréquence du signal émis par le badge. Le principal inconvénient de cet oscillateur est qu'il fonctionne en oscillateur "libre", c'est-à-dire que la fréquence peut varier en fonction des désadaptations présentées à l'antenne du badge. Cet inconvénient devient majeur dans les applications nécessitant une grande stabilité de la fréquence générée par l'oscillateur. C'est le cas par exemple pour des applications dans des bandes de fréquences normalisées très étroites, elles-mêmes subdivisées en sous-bandes.

Le but de l'invention est de pallier les inconvénients précités.

A cet effet l'invention a pour objet un système d'identification hyperfréquence courte portée, par échanges de données suivant un protocole déterminé entre au moins un lecteur et au moins une étiquette active, le lecteur et l'étiquette comportant respectivement des moyens de modulation et de démodulation des données couplés à une antenne d'émission/réception, et des moyens de traitements numériques gérant les données émises et reçues, caractérisé en ce que l'étiquette comporte en outre une chaîne de réveil comportant des moyens permettant d'activer une chaîne d'écriture et une chaîne d'émission de l'étiquette quand une séquence déterminée du protocole émise par une lecteur en portée radioélectrique est détectée, la chaîne d'émission de l'étiquette comportant des moyens générant un signal d'émission modulé en phase dont la fréquence est stabilisée quelles que soient les désadaptations présentées à l'antenne d'émission/réception de l'étiquette, la chaîne d'émission comportant également en sortie des moyens de commutation commandés par des moyens de traitement numérique, permettant de commuter alternativement la chaîne d'émission et la chaîne d'écriture de l'étiquette respectivement pour émettre et recevoir des données conformément au protocole, et en ce que le lecteur comporte des moyens de commutation commandés par des moyens de traitement numérique permettant de commuter alternativement l'émetteur et le récepteur du lecteur respectivement pour émettre et recevoir des données conformément au protocole.

L'étiquette hyperfréquence selon l'invention a pour avantage qu'elle permet de s'affranchir des perturbations radioélectriques extérieures à l'étiquette et des désadaptations présentées à l'étiquette, d'être léger et consommer peu d'énergie dans un encombrement le plus faible possible d'un prix très bas et d'une autonomie très grande.

D'autres caractéristiques et avantages de l'invention apparaîtront plus clairement à l'aide de la description qui suit faite en regard des dessins annexés qui représentent :
- la figure 1, un schéma fonctionnel d'une étiquette hyperfréquence selon l'invention,
- la figure 2, un schéma fonctionnel d'un lecteur portatif selon l'invention,
- la figure 3, un protocole de communication entre un lecteur portatif et une étiquette hyperfréquence selon l'invention, et
- la figure 4, un schéma fonctionnel d'un deuxième mode de réalisation d'une étiquette hyperfréquence selon l'invention.

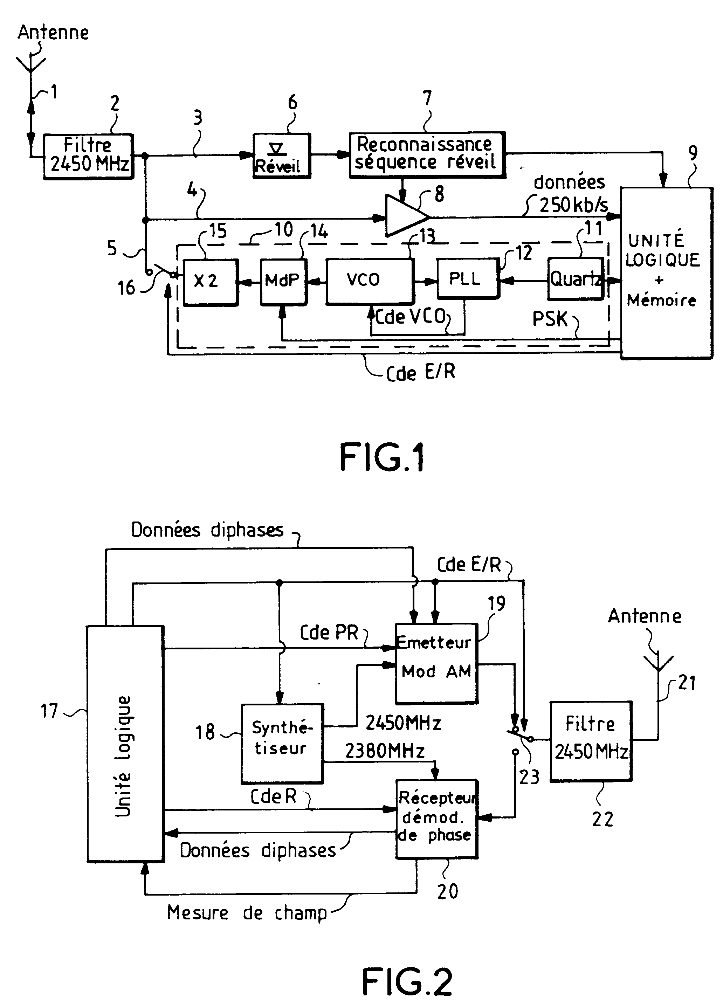

L'étiquette représentée à la figure 1 comporte une antenne omnidirectionnelle d'émission-réception faible gain 1 couplée à un filtre d'antenne 2 procurant un filtrage suffisant pour qu'un brouilleur ne désensibilise pas le badge en mode réveil ou écriture.

La sortie du filtre 2 est couplée respectivement à une chaîne de réveil 3, une chaîne d'écriture 4 et une chaîne d'émission 5.

La chaîne de réveil 3 comporte des moyens 6 de détection d'amplitude couplés en sortie à des moyens 7 de reconnaissance et de réveil de l'étiquette. La chaîne d'écriture 4 comporte des moyens d'amplification 8 des données reçues par l'antenne 1. Les moyens d'amplification 8 sont activés par un signal délivré par les moyens de reconnaissance 7. Les chaînes de réveil et d'écriture 3 et 4 sont respectivement couplées par leur sortie à une première et une deuxième entrées de moyens de traitement numérique 9 comportant une unité logique et un bloc mémoire connus, par exemple un microprocesseur. La chaîne émission 5 comporte un oscillateur-émetteur modulable 10 délimité par une ligne fermée discontinue. L'oscillateur-émetteur modulable 10 comporte un oscillateur de référence 11, par exemple à quartz, délivrant par exemple une fréquence de 19, 14 MHz. L'oscillateur de référence 11 délivre un signal d'horloge d'une part sur les moyens de traitement numérique 9 et d'autre part sur une boucle à verrouillage de phase 12, ou PLL, abréviation anglo-saxonne pour "Phase Locked Loop". Cette boucle 12 comporte des moyens connus, non représentés, constitués d'un comparateur de phase, d'un circuit diviseur de fréquence, d'un filtre et d'un amplificateur. L'oscillateur-émetteur modulable 10 comporte également un oscillateur 13 constitué d'un VCO, abréviation anglo-saxonne pour 'Voltage Controled Oscillator". Le VCO 13 délivre une fréquence, dans cet exemple de 1225 MHz, sur une deuxième entrée de la PLL 12 et sur une première entrée de moyens de modulation de phase MdP 14. Le VCO 13 reçoit sur son entrée une commande, Cde VCO, délivrée en sortie de la PLL 12. Les moyens de modulation de phase MdP 14 reçoivent sur une deuxième entrée un signal de modulation de type PSK, abréviation anglo-saxonne pour "Phase-Shift Keying", délivré par les moyens de traitement numérique 9. La sortie des moyens de modulation de phase MdP 14 est couplée à l'entrée de moyens 15 doubleurs de fréquence. La sortie de ces moyens 15, correspondant également à la sortie de l'oscillateur-émetteur 10, est couplée sur une première entrée d'un relais d'antenne 16. Ce relais 16 est activé par une commande émission-réception, Cde E/R, délivrée par les moyens de traitement numérique 9. A l'émission, les chaînes de réveil et d'écriture 3 et 4 sont inhibées alors qu'en réception, c'est la chaîne émission qui est inhibée.

L'asservissement de la fréquence de l'oscillateur-émetteur 10 est similaire à celui d'une boucle de phase de type connu.

La fréquence délivrée par le VCO 13, dans l'exemple égale à 1 225 MHz, est divisée par 64 avant d'être comparée en phase avec la fréquence de 19,14 MHz issue de l'oscillateur à quartz 11 de référence. Le signal électrique délivré par le comparateur de phase est représentatif de la différence de phase entre la fréquence de 1 225 MHz divisée par 64 et la fréquence de 19,14MHz du quartz 11. Le signal est ensuite amplifié et filtré par le circuit de filtrage puis appliqué sur l'entrée appelée "commande de fréquence" du VCO 13. Le circuit de filtrage de la PLL 12 assure un asservissement de la fréquence d'émission sur une large bande déterminée de manière à rendre insensible le VCO 13 aux perturbations extérieures et intérieures au système selon l'invention. En effet l'antenne 1 peut être masquée par des objets métalliques qui la désadaptent. Elle peut également capter des rayonnements radioélectriques puissants volontaires ou non. Le VCO 13 doit être donc très rapide à se verrouiller en phase.

Les moyens de modulation de phase MdP 14 sont réalisés par exemple par un circuit déphaseur linéaire inséré entre le VCO 13 et le doubleur de fréquence 15. L'excursion de phase à ce niveau est donc de moitié, 0 et π/2, car le doubleur de fréquence 15 double l'indice de modulation; les moyens de modulation de phase MdP 14 sont réalisés par exemple par des condensateurs, des diodes à capacité variable et des inductances. Les données de modulation PSK issues des moyens de traitement numérique 9, filtrées en bande de base, commandent les diodes à capacité variable. Le spectre émis est ainsi limité en occupation spectrale.

En mode émission tous les circuits de l'oscillateur sont alimentés et le signal délivré par l'oscillateur-émetteur 10 est transmis à l'antenne 1.

La figure 2 illustre un schéma fonctionnel d'un lecteur portatif selon l'invention.

Ce lecteur comporte une unité logique 17, par exemple un microprocesseur, permettant la gestion des informations émises et reçues par le lecteur.

Le lecteur comporte également un synthétiseur de fréquence 18 générant une première fréquence, par exemple de 2 450 MHz, et une deuxième fréquence, par exemple de 2 380 MHz. La différence entre ces deux fréquences constitue une fréquence intermédiaire FI égale donc à 70 MHz dans cet exemple. Le synthétiseur 18 reçoit sur son entrée une commande Cde E/R de l'unité logique 17 permettant de sélectionner la fréquence à délivrer par le synthétiseur 18.

Le lecteur comporte ensuite un émetteur 19, modulable en amplitude, émettant un signal à la fréquence de 2 450 MHz générée par le synthétiseur 18. L'émetteur 19 reçoit sur une première entrée une commande de puissance réduite, Cde PR, la commande émission/réception, Cde E/R, sur une deuxième entrée et des données diphases à transmettre, sur une troisième entrée. Ces trois commandes sont générées par l'unité logique 17.

Le lecteur comporte un récepteur/démodulateur de phase 20 démodulant le signal reçu sur une première entrée à la fréquence de 2 380 MHz, correspondant à la deuxième fréquence générée par le synthétiseur 18.

Le récepteur 20 reçoit sur une deuxième entrée une commande de réception, Cde R, générée par l'unité logique 17. Il délivre sur une première sortie les données diphases reçues démodulées et sur une deuxième sortie une information sur l'amplitude du champ détecté. Ces deux informations sont injectées respectivement sur une première et une deuxième entrée de l'unité logique 17.

Une antenne 21, servant à la fois pour l'émission et la réception, est couplée à un filtre d'antenne 22, centré sur la fréquence de 2 450 MHz dans l'exemple traité, lui-même couplé à un moyen de commutation 23, un relais par exemple, commandé par la commande Cde E/R. Cette commande permet de sélectionner soit la sortie de l'émetteur 19 soit l'entrée du récepteur 20.

Le fonctionnement du lecteur est le suivant :
En mode interrogateur ou recherche d'étiquettes à identifier, I'émetteur 19 émet brièvement en modulation d'amplitude, des messages de réveil comprenant une séquence de réveil particulière suivie de l'identité du lecteur. Puis l'émetteur 19 est commuté en mode repos par la commande Cde E/R et le récepteur 20 est activé dans l'attente d'une ou d'éventuelles réponses provenant d'une ou plusieurs étiquettes réveillées, donc en portée radioélectrique. Le récepteur 20 démodule les données modulées en phase émises par les étiquettes. Ces données sont transmises à l'unité logique 17 qui les interprète. Cette unité logique 17 commande alors alternativement l'émetteur 19 et le récepteur 20 pour transmettre et recevoir les données. Les périodes de réception sont beaucoup plus longues que les périodes d'émission. Cela permet au lecteur d'avoir une grande autonomie de fonctionnement avec des batteries rechargeables de 1 ampère-heure de capacité lui permettant d'être portatif. La puissance émise est d'environ 200 milliwatts et elle est compatible aux normes de santé des personnes (< à 10 milliwatts/1cm² à une distance de 1 cm de l'antenne 21 du lecteur). Le récepteur 20 est du type superhétérodyne avec une fréquence intermédiaire FI de 70 MHz. De ce fait, quand le récepteur 20 est en fonctionnement, la fréquence du synthétiseur 18 est égale à la fréquence émission moins la valeur de la fréquence intermédiaire, soit 2 380 MHz. Le spectre reçu est large, de l'ordre de +/-500KHz, du fait du débit élevé des données et du codage diphase FMO utilisé et la précision de la fréquence émise par les étiquettes est de l'ordre de +/-250KHz. La sélectivité du récepteur 20 est réalisée en fréquence intermédiaire FI par exemple par l'emploi d'un filtre à onde de surface ayant une bande passante de l'ordre de +/-2 MHz. La sensibilité du récepteur 20 est alors de -90dBm pour un taux d'erreur bit, ou TEB, de l'ordre de 10⁻⁶.

Pour éviter les brouillages entre des lecteurs proches, il est possible de changer la fréquence d'émission en programmant la fréquence du synthétiseur 18, les fréquences réception étant toujours les mêmes.

Il est possible de remplacer l'antenne 21 omnidirectionnelle de faible gain (1 à 2 dBi) par une antenne directive de plus grand gain pour augmenter la portée du lecteur.

Une commande de puissance réduite, Cde PR, réduit la puissance émise de manière à réduire la portée d'interrogation dans le cas où le porteur du lecteur désire identifier une étiquette particulière, par exemple une étiquette portée par un véhicule.

Un protocole d'échange d'informations entre une étiquette et au moins un lecteur selon l'invention est illustré par la figure 23 et permet également d'expliquer le fonctionnement de l'étiquette et du lecteur lors d'un tel échange.

En l'absence de lecteur en portée radioélecrique, seuls les moyens de réveil 6 et 7 de l'étiquette sont alimentés par une pile non représentée, dont la consommation est inférieure à 5 micro-ampères, ce qui confère à l'étiquette une autonomie supérieure à 5 ans. Tous les autres circuits sont non alimentés.

Quand un lecteur est en portée, celui-ci émet un bref signal hyperfréquence modulé en modulation d'amplitude par "tout ou rien" de type OOK ou ASK, par une séquence de réveil suivie par des données identifiant le lecteur. Les moyens de réveil 6 de l'étiquette détectent alors ce message et mettent sous tension les moyens de reconnaissance 7 de la séquence de réveil. Si cette séquence de réveil est bien reconnue, alors tous les autres circuits de l'étiquette sont alimentés. La chaîne d'écriture 4 amplifie les données transmises par le lecteur et qui sont ensuite traitées par les moyens de traitement numérique 9.

Il s'effectue alors une série d'échanges d'informations entre l'étiquette et le lecteur conformément au protocole utilisé. Ce protocole comporte une première phase d'identification de l'étiquette en transmettant des données vers le lecteur dans les intervalles de temps tirées aléatoirement parmi un nombre déterminé d'intervalles de temps possibles, une phase de réservation où le lecteur ordonne aux différentes étiquettes réveillées de transmettre leurs données également dans des intervalles de temps bien déterminés, une phase de transmission des données contenues dans l'étiquette vers le lecteur, une phase d'acquittement du lecteur, une phase de répétition des échanges en cas d'échec, c'est-à-dire en cas de collision de messages, et une phase replaçant l'étiquette en mode veille.

Pendant les phases de transmissions descendantes, c'est-à-dire du lecteur vers l'étiquette, le lecteur émet en modulation d'amplitude et les étiquettes sont en mode démodulation en utilisant la chaîne d'écriture 4 et les moyens de traitement numérique 9 pour le traitement du signal reçu par l'antenne 1.

Pendant les phases de transmissions montantes, c'est-à-dire de l'étiquette vers le lecteur, le lecteur n'émet plus. L'étiquette active son oscillateur-émetteur 10 en le modulant en phase deux états 0 ou π au rythme des données à transmettre de l'ordre de 250Kbits/s. En effet la modulation de phase est choisie dans le sens étiquette vers lecteur car elle est plus performante que la modulation d'amplitude et facilement réalisable dans un objet de très petite taille comme une carte de crédit par exemple, et de faible coût.

La puissance émise par l'oscillateur-émetteur 10 est faible, mais suffisante de manière à ne pas être perturbée par le bruit radioélectrique émis, par exemple, par le véhicule porteur de l'étiquette. La portée ne dépend ainsi que du seuil de réveil. La consommation de l'oscillateur-émetteur 10 est très faible, inférieure à 10 milliampères et ne dure que quelques millisecondes, nécessaires pour transmettre les données vers le lecteur.

De ce fait, le lecteur en attente de réponse de ou des étiquettes n'a pas besoin d'émettre en continu une onde comme cela est nécessaire pour des étiquettes passives, réflectives. Ce qui évite d'encombrer l'espace hertzien et de brouiller éventuellement d'autres lecteurs voisins. De plus, le lecteur n'a besoin que d'une seule antenne 21 pour l'émission/réception contrairement à certains systèmes existants nécessitant deux antennes distinctes, une pour l'émission et une pour la réception.

Les caractéristiques électriques du lecteur sont considérablement simplifiées et très facilement réalisables. La portée est ainsi bien maîtrisée et ne dépend que du chemin descendant lecteur vers étiquette par l'émission d'un bref message de réveil de l'objet à identifier par le lecteur.

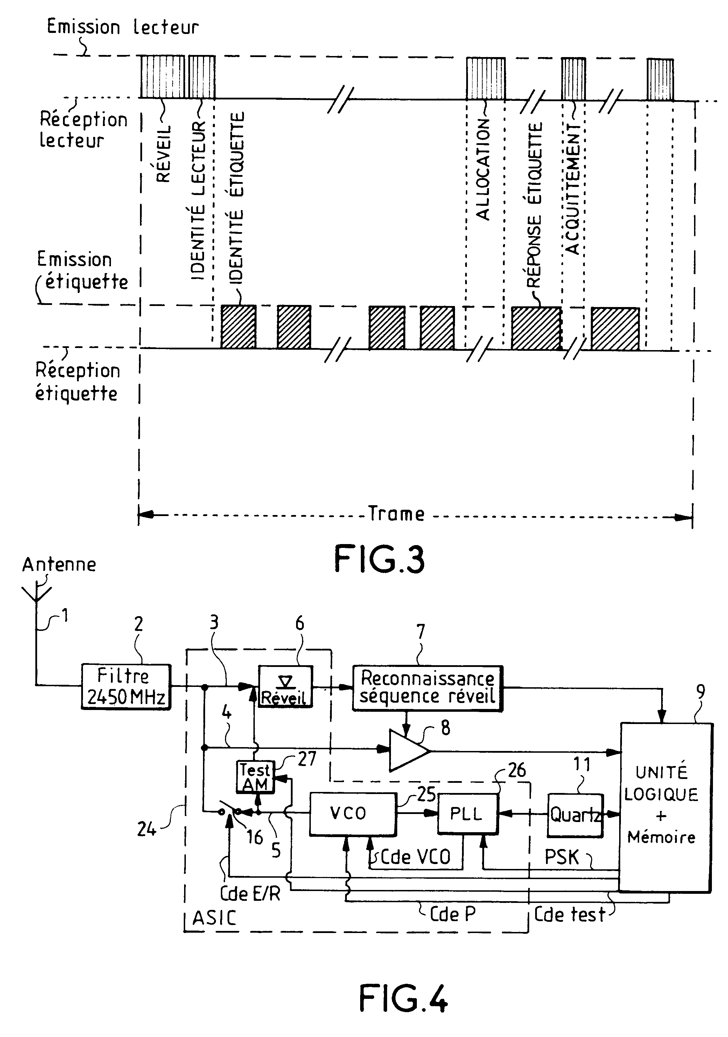

La figure 4 illustre un deuxième mode de réalisation d'une étiquette dans un système d'identification selon l'invention. Les éléments homologues à ceux de la figure 1 sont désignés par les mêmes repères. Dans ce mode de réalisation l'architecture de l'oscillateur-émetteur 10 est modifiée grâce à l'utilisation d'un composant ASIC 24 abréviation anglo-saxonne pour "Application Specific Integrated Circuit" délimité par une ligne fermée discontinue. L'oscillateur-émetteur 10 comporte dans ce deuxième mode de réalisation un VCO 25 accordé directement sur la fréquence à émettre égale dans l'exemple traité à 2 450MHz, une PLL 26 incluant une chaîne de diviseurs par N, un comparateur/démodulateur de phase ainsi qu'un circuit de filtrage non représentés.

L'emploi d'un ASIC permet d'optimiser la consommation en courant qui devient ainsi inférieure à 5 milliampères en phase active. L'ASIC 24 regroupe également les moyens de détection 6 de la chaîne de réveil 3 et comporte en outre des moyens automatique de test 27 permettant de tester le bon fonctionnement de l'étiquette. Ce test, simulant la réception de données émises par un lecteur en portée radioélectrique, peut être effectuer régulièrement, en sachant que l'étiquette est essentiellement à l'état de veille permanente, donc sans perturber le fonctionnement du système en cas d'échanges entre l'étiquette et un lecteur. Le test consiste à réinjecter une fraction du signal hyperfréquence délivré par le VCO 25, à la fréquence de 2 450 MHz, modulé en amplitude par les moyens de test eux-mêmes, à l'entrée des moyens de réveil 6. Ces moyens de test 27 reçoivent sur une première entrée une commande "test" générée par les moyens de traitement numérique 9. Ils reçoivent sur une deuxième entrée le signal délivré par le VCO 25. Le VCO 25 reçoit sur une première entrée le signal de commande, Cde VCO, délivrée par la PLL 26 et reçoit en outre sur une deuxième entrée une commande de puissance, Cde P, générée par les moyens de traitement numérique 9 permettant le réglage du niveau de la puissance d'entrée du VCO 12. La commande de modulation PSK est délivrée par les moyens de traitement numérique 9 et est injectée directement sur une troisième entrée de la PLL 26, la première et la deuxième entrée recevant respectivement le signal délivré par le quartz 11 et le signal délivré par le VCO 25. Les autres éléments de l'étiquette étant homologues à ceux de la figure 1, ils ne sont donc pas redécrits.

D'autres variantes de modes de réalisation sont possibles sans pour autant sortie du cadre de l'invention. La fréquence d'émission peut être différente de la fréquence de réception et le réglage de la puissance émise peut être programmé à partir des données émises par le lecteur, lequel aura mesuré le champ reçu dans son récepteur et décidé que la puissance émise par l'étiquette est trop élevée ou trop faible. Ceci permet d'éviter d'encombrer l'espace hertzien. D'autre part l'augmentation du débit des informations transmises peut être supérieure à 1 Mbit.

## Revendications

1. Système d'identification hyperfréquence courte portée, par échanges de données suivant un protocole déterminé entre au moins un lecteur et au moins une étiquette active, le lecteur et l'étiquette comportant respectivement des moyens de modulation et de démodulation des données couplés à une antenne d'émission/réception, et des moyens de traitements numériques gérant les données émises et reçues, caractérisé en ce que l'étiquette comporte en outre une chaîne de réveil (3) comportant des moyens (6 et 7) permettant d'activer une chaîne d'écriture (4) et une chaîne d'émission (5) de l'étiquette quand une séquence déterminée du protocole émise par une lecteur en portée radioélectrique est détectée, la chaîne d'émission (5) de l'étiquette comportant des moyens (10) générant un signal d'émission modulé en phase dont la fréquence est stabilisée quelles que soient les désadaptations présentées à l'antenne (1) d'émission/réception de l'étiquette, la chaîne d'émission (5) comportant également en sortie des moyens de commutation (16) commandés par des moyens de traitement numérique (9), permettant de commuter alternativement la chaîne d'émission (5) et la chaîne d'écriture (4) de l'étiquette respectivement pour émettre et recevoir des données conformément au protocole, et en ce que le lecteur comporte des moyens de commutation (23) commandés par des moyens de traitement numérique (17) permettant de commuter alternativement l'émetteur (19) et le récepteur (20) du lecteur respectivement pour émettre et recevoir des données conformément au protocole.

2. Système selon la revendication 1, caractérisé en ce que les moyens permettant d'activer les chaînes d'écriture (4) et d'émission (5) comportent des moyens de détection d'amplitude (6) du signal reçu par l'antenne (1), couplés à des moyens de reconnaissance de séquences de réveil (7) de l'étiquette, en ce que la chaîne d'écriture (4) comporte des moyens d'amplification (8) des données reçues par l'antenne (1), ces moyens (8) étant activés par les moyens de reconnaissance (7), en ce que les moyens (10) de la chaîne d'émission (5) comporte un oscillateur commandé en tension, ou VCO (13), dont la tension de commande est délivrée par une boucle à verrouillage de phase ou PLL (12), comparant la phase d'un signal de référence dont la fréquence est déterminée par un quartz (11) à la phase du signal délivré par le VCO (13), et comporte des moyens de modulation (14) de la phase du signal délivré par le VCO (13), la fréquence du signal délivré en sortie des moyens de modulation (14) étant adaptée par des moyens multiplicateurs de fréquence (15) à la fréquence sur laquelle est adaptée l'antenne (1) de l'étiquette.

3. Système selon l'une quelconque des revendications 1 à 2, caractérisé en ce que les moyens de détection d'amplitude (6), les moyens de commutation (16) ainsi que les moyens (10) générant le signal d'émission, sont réalisés à partir d'un ASIC (24) permettant de diminuer la consommation en courant de l'étiquette dans sa phase active.

4. Système selon l'une quelconque des revendications 1 à 3, caractérisé en ce qu'il comporte en outre des moyens de test (27) couplés à la sortie de la chaîne d'émission (5) et commandés par les moyens de traitement numérique (9), la sortie des moyens de test (27) délivrant un signal modulé en amplitude à l'entrée des moyens de détection (6) de la chaîne de réveil (3) pour simuler la réception d'un signal émis par un lecteur en portée radioélectrique et tester ainsi le bon fonctionnement de l'étiquette.

5. Système selon l'une quelconque des revendications 1 à 4, caractérisé en ce que le lecteur utilisé lors d'échanges de données avec au moins une étiquette est un lecteur portatif.

6. Système selon l'une quelconque des revendications 1 à 5, caractérisé en ce que l'étiquette hyperfréquence est de format "carte de crédit".
